Europäisches Patentamt

European Patent Office

Office européen des brevets

(19)

(11) Veröffentlichungsnummer: **0 034 319**
**B1**

(12) # EUROPÄISCHE PATENTSCHRIFT

(45) Veröffentlichungstag der Patentschrift:
**10.08.83**

(51) Int. Cl.³: **C 03 B 5/12**, F 27 B 1/00

(21) Anmeldenummer: **81100891.1**

(22) Anmeldetag: **09.02.81**

(54) **Verfahren zum Herstellen einer Gesteinsmaterialschmelze in einem Kupolofen.**

(30) Priorität: **14.02.80 DK 631/80**

(43) Veröffentlichungstag der Anmeldung:
**26.08.81 Patentblatt 81/34**

(45) Bekanntmachung des Hinweises auf die Patenterteilung:
**10.08.83 Patentblatt 83/32**

(84) Benannte Vertragsstaaten:
**AT BE CH DE FR GB LI LU NL SE**

(56) Entgegenhaltungen:
**DE-B-1 496 679**
**DE-B-2 428 891**
**GIESSEREI, Band 61, Nr. 10, 1974 J. BAKKER et al.**
**«Praktische Erfahrungen an Kupolöfen mit Temperatur-**
**und Leistungsregelung» Seiten 284 bis 291**

(73) Patentinhaber: **Rockwool International A/S, 501,**
**Hovedgaden, DK-2640 Hedehusene (DK)**

(72) Erfinder: **Jensen, Leif, Petuniavej 16, DK-3650 Oelstykke**
**(DK)**

(74) Vertreter: **Köhne, Friedrich, Dipl.-Ing.,**
**Postfach 250265 Lothringer Strasse 81,**
**D-5000 Köln 1 (DE)**

Verfahren zum Herstellen einer Gesteinsmaterialschmelze in einem Kupolofen

Die Erfahrung bezieht sich auf ein Verfahren gemäss dem Oberbegriff des Anspruches 1.

Das Schmelzen von Gesteinsmaterial in einem Kupolofen ist mit einer Reihe von Problemen verbunden, die beim Schmelzen von Metallen, besonders von Eisen, nicht bekannt sind bzw. nicht auftreten. Wenn die heissen Gase durch die Lagen bzw. Schichten oberhalb der Verbrennungs- und Schmelzzone hindurchströmen, wobei diese Lagen durch die Hitze des Gases während des Durchströmens vorerhitzt werden, wird zumindest ein Teil des Kohlendioxyds infolge einer Reaktion mit dem Koks in diesen Lagen zu Kohlenmonoxyd reduziert. Auf diese Weise ergibt sich eine reduzierte Atmosphäre, die beim Schmelzen von Gestein unnötig ist, weil Minerale nicht reduziert werden müssen. Die Bildung von Kohlenmonoxyd hat zur Folge, dass die im Koks enthaltene Hitze nur teilweise ausgenutzt wird und die Wirtschaftlichkeit des Brennstoffverbrauches üblicherweise schlecht ist. Ein Gehalt an Kohlenmonoxyd von 20% in den Abgasen des Ofens ist nicht selten.

Ein weiteres Problem beim Schmelzen von Gestein ist darin zu sehen, dass Tröpfchen des geschmolzenen Materials die Neigung haben, mit dem Strom des Verbrennungsgases aufwärts mitgeführt zu werden. Daher muss die Luftzuführung so niedrig gehalten werden, dass ein solcher aufwärts gerichteter Fördervorgang nicht eintritt. Die verhältnismässig niedrige Geschwindigkeit des Gases in der Verbrennungszone und der anschliessenden oberen Zone bringt es mit sich, dass die Gase eine gute Gelegenheit haben, mit dem noch nicht entzündeten Koks zu reagieren. Aufgrund der überall vorhandenen niedrigen Wirksamkeit der Verbrennung ist ein grosser Anteil an Koks in der der Beschickung erforderlich, wodurch entsprechend die Bedingungen für die Bildung von Kohlenmonoxyd verbessert werden.

Diese Probleme sind bereits seit einer Reihe von Jahren bekannt und es wurden bereits mehrere Lösungen für diese Probleme vorgeschlagen, beispielsweise den Koks mit einer Mörtelschicht zu umgeben, um den Koks so lange zu schützen, bis er die Verbrennungszone erreicht, in welcher der Mörtel als Zusatz zu dem zu schmelzenden Gesteinsmaterial wirksam werden kann. Dieses Verfahren hat keine praktischen Ergebnisse erbracht, so dass es in der Praxis nicht verwirklicht worden ist.

Der Erfindung liegt demgegenüber die Aufgabe zugrunde, ein Verfahren der Anfangs erläuterten Art zu schaffen, durch welches der Gehalt an CO im Abgas verringert und gleichzeitig eine Herabsetzung des Anteiles an Koks in der Beschickung erreicht wird.

Diese Aufgabe wird durch die im kennzeichnenden Teil des Anspruches 1 angegebenen Merkmale gelöst.

Durch Erhöhung der Luftzufuhr verglichen mit der Menge, die bisher als oberste Grenze angesehen worden ist, erhöht sich die Schmelzkapazität. Gleichzeitig wird die Gefahr, dass Tröpfchen der Schmelze mit dem Gasstrom gefördert werden, durch die hohe Porosität der Beschickung vermindert, da die Gasgeschwindigkeit in den Zwischenräumen zwischen den Briketts nicht grösser wird. Durch die Vergrösserung des Gasstromes durch den Ofen wird der Zeitraum verringert, in welchem die Gase mit dem nicht entzündeten Koks in der Beschickung reagieren können. Der CO-Anteil in den Abgasen wird dadurch, verglichen mit den gegenwärtigen Verhältnissen, um mindestens 50% verringert. Diese überraschend hohe Verbesserung ergibt sich neben anderen Faktoren hauptsächlich durch die bessere Wirksamkeit der Verbrennung, wobei gleichzeitig der Anteil von Koks in der Beschickung verringert werden kann, was wiederum eine Verminderung der Bildung von Kohlenmonoxyd zur Folge hat.

Die Porosität ist definiert als die Porosität einer willkürlich aufgeschütteten Schicht von gleich grossen Teilchen mit einer bekannten sphärischen Gestalt. Die sphärische Gestalt bedingt einen Koeffizienten, der als Verhältnis zwischen dem Volumen der Briketts und dem Volumen eines sphärischen Körpers mit der gleichen Oberflächenabmessung wie der der Briketts plus 25% definiert ist. Der Zuschlag dient dazu, die gemessenen und die berechneten Wärmeübertragungswerte zwischen Gas und Briketts in Übereinstimmung zu bringen und er bezieht sich auf die Rauhigkeit der Oberfläche der Briketts.

Die im Anspruch angegebene Grösse der Porosität kann in der Praxis mittels gleich grossen Briketts erreicht werden, bei welchen die grösste Abmessung zweimal so gross ist wie die mittlere Abmessung senkrecht zur grössten Abmessung. Das bedeutet, dass Briketts in Gestalt eines Parallelepipeds, mit quadratischem Querschnitt und einer Höhe, die zweimal so gross ist wie die Seite des Quadrates, so wie mit einer rauhen und groben Oberfläche eine Beschickung bzw. Charge mit der gewünschten Porosität in dem Ofen ergeben. Dadurch ist die erforderliche Basis für das erfindungsgemässe Verfahren gegeben.

Der gemäss der Erfindung bevorzugte Bereich für die Gasgeschwindigkeit bezogen auf den Ofenquerschnitt beträgt 75 – 120 Nm$^3$/m$^2$ Minute (Normale-m$^3$ Luft m$^2$ pro Minute).

Gemäss einer vorteilhaften Weiterentwicklung der Erfindung wird zusätzliche Verbrennungsluft durch zweite Zuführungsrohre über der Verbrennungs- bzw. Schmelzzone zugeführt.

Zusätzlich bzw. zweite Zuführungsrohre sind an sich beim Schmelzen von Eisen in Schachtöfen bekannt, und zwar als Mittel um Koks zu sparen, (nicht in Verbindung mit dem Schmelzen von Gesteinsmaterial) wobei die Verbrennung eines Gases mit einem hohen Gehalt die Temperatur in der zweiten Zone auf einen Bereich anwachsen lässt, bei welchem neues CO aus dem Koks in der Charge gebildet wird.

Gemäss der Erfindung, durch welche unter Verwendung von Briketts der CO-Gehalt im heissen Gas auf 4 bis 6% verringert worden ist, ist auch die Gefahr ausgeschaltet, Temperaturen zu erreichen, die über der Schmelztemperatur des Materials liegen und bei welchen sich CO bildet. Ein wesentlicher Gesichtspunkt für das zusätzliche Zuführen von Verbrennungsluft ist darin zu sehen, dass der Gehalt an Schwefelwasserstoff um 75% verringert wird. Der Gehalt an CO im Abgas kann auf weniger als 2% herabgesetzt werden.

Die Erfindung ist nachfolgend noch näher an Hand von vergleichenden Beispielen erläutert.

Mineralwolle wird durch Schmelzen eines Gesteinsmaterials, welches hauptsächlich Diabas und Kalk enthält in einem Kupolofen hergestellt.

Um ein schnelles und vollständiges Schmelzen zu erreichen, wird das Gesteinsmaterial in einer ausgewogenen Mischung von Komponenten beschickt, welche zerrieben oder zerkleinert und in Briketts umgeformt werden können, wobei beispielsweise Zement als Bindemittel verwendet wird. Das Gesteinsmaterial oder die Briketts werden zusammen mit dem Koks in einen Kupolofen aufgegeben, in welchem das Schmelzen stattfindet und von welchem das geschmolzene Gestein abgezogen wird, um mittels eines Kaskadenspinners in Fasern umgeformt zu werden. In dem Kaskadenspinner fällt ein dünner Strom der Schmelze auf den Umfang eines oder mehrerer schnell rotierender Räder.

Die Porosität der wahllos aufgeschütteten Schichten aus gleich grossen sphärischen Teilchen beträgt bisher normalerweise 0,3 bis 0,35. Wahllos aufgeschüttete Teilchen von unterschiedlicher Grösse ergeben meist eine geringere Porosität, da die kleineren Teilchen die Zwischenräume zwischen den grösseren Teilchen ausfüllen können. Im normalen Betrieb eines Kupolofens, der mit Gesteinsmaterial beschickt ist, war es bisher nicht möglich, Verbrennungsluft durch die Rohre in einer Menge von mehr als 30 bis 50 $Nm^3/m^2$ Minute (Normal-$m^3$ Luft pro $m^2$ und pro Minute bezogen auf den Querschnitt in dem Ofen) einzublasen, ohne dass Tröpfchen der Schmelze mittels des Luftstromes nach oben hin transportiert wurden. Dieser Luftstrom ist wesentlich geringer als die Ströme, die in Kupolöfen beim Schmelzen von beispielsweise Eisen verwendet werden, jedoch aus den vorerläuterten praktischen Gründen musste der Gasstrom auf einen verhältnissmässig niedrigen Bereich beschkänkt werden.

Bei normalem Betrieb beträgt der prozentuale Anteil von Koks in einer Charge 15%, um die erforderliche Temperatur in der Schmelzzone zu erreichen, wobei dei Abgase 10 bis 20% Kohlenmonoxyd enthalten. Die geringe Strommenge von Verbrennungsluft beschränkt auch die Schmelzkapazität des Kupolofens. Die normale Kapazität für einen Ofen mit einem Durchmesser von 1,4 m beläuft sich auf etwa 5.000 kg/Stunde.

Gemäss der Erfindung wird das Gesteinsmaterial in Briketts von solcher Gestalt geformt, dass in der wahllos aufgeschütteten Packlage eine Porosität von 0,45 vorhanden ist. Die mittlere Porosität kann für gleich grosse Teile auf der Basis der sphärischen Gestalt dieser Teilchen berechnet werden, beispielsweise unter Ermittlung des Verhältnisses zwischen dem Volumen jedes Teilchens und der sphärischen Gestalt mit der gleichen Oberflächengrösse wie das Teilchen, da die Porosität von wahllos geschichteten Lagen eine Funktion der sphärischen Gestalt ist (G. C. Brown and Associates, Unit Operations, John Wiley & Sons, New York, 1950). In dem besonderen Fall ist es erforderlich, den Bereich der Teilchen um 25% zu erhöhen, um eine Übereinstimmung zwischen den errechneten und gemessenen Werten für die Wärmeübertragung zu erhalten. Die Porosität nach der Definition der vorliegenden Erfindung schliesst diese 25%ige Bereichserhöhung ein.

Es wurden Versuche beim Schmelzen von Gesteinsmaterial in einem Ofen durchgeführt, welcher einen Kreisquerschnitt und einen Durchmesser von 1,4 m aufweist und welcher mit Briketts von einer solchen Gestalt beschickt worden ist, dass sich eine Porosität der Beschickung von 0,48 ergab, verbunden mit einer Erhöhung des Verbrennungsgasstromes auf 65 $Nm^3/m^2$ Minute. Hierdurch wurde der Kohlenmonoxydgehalt im Abgas auf 5% verringert und es ergab sich eine Verringerung des prozentualen Anteiles an Koks in der Charge von 20%, beispielsweise bis zu 11,5% der Charge. Zur gleichen Zeit wurde die Schmelzkapazität des Ofens auf 8.000 kg/Stunde erhöht.

Durch Computer ausgeführte Simulationen haben angezeigt, dass bei einem Intervall der Porosität zwischen 0,45 und 0,50 und bei einem Verbrennungsgasstrom zwischen 75 bis 120 $Nm^3/m^2$ Minute eine weitere Verringerung im Abgas eintritt, verbunden mit einer Verringerung des prozentualen Anteiles an Koks in der Charge um 40%, verglichen mit bisher üblichen Verfahren.

Wenn man eine Charge aus Briketts mit prismatischer Gestalt verwendet, und zwar mit hexagonaler Grundfläche und einer Höhe, die zweimal so gross ist wie die Länge einer Seite der Grundfläche, ergibt sich eine berechnete Porosität in der Charge von 0,48%. Wenn man verschiedene Mengen von Verbrennungsgasströmen verwendet, zeigt sich die nachfolgende Beziehung zwischen Verbrauch von Koks, Schmelzkapazität und CO-Gehalt im Abgas.

| Luft $Nm^3/min$ | Luft $Nm^3/m^2min$ | Koks % | Schmelz-kapazität kg/h | Abgas CO-% |
|---|---|---|---|---|
| 45 | 29 | 18.0 | 3000 | 20.8 |
| 75 | 49 | 15.4 | 5000 | 13.0 |
| 90 | 59 | 12.8 | 6328 | 6.9 |
| 120 | 78.5 | 9.0 | 10722 | 2.0 |

Diese Ergebnisse wurden, wie oben erläutert wurde, in praktischen Versuchen bestätigt.

Zusätzliche Verbrennungsluft kann durch einen Satz von zweiten Rohren zugeführt werden, die oberhalb der Verbrennungszone angeordnet sind. Durch Zuführen zusätzlicher Verbrennungsluft kann sowohl die Schmelzkapazität von 8.000 kg/Stunde auf 8.800 kg/Stunde in dem Ofen, auf den in diesem Beispiel Bezug genommen ist, erhöht werden. Gleichzeitig kann der CO-Gehalt im Abgas praktisch völlig beseitigt werden. Weiterhin kann der Gehalt an Schwefelwasserstoff im Abgas verringert werden. Der Strom durch die zweiten Rohre betrug 10 – 15 $Nm^3/m^2$ Minute, wodurch sich ein Gesamtstrom an Verbrennungsluft von etwa 75 $Nm^3/m^2$ Minute ergab.

**Patentansprüche**

1. Verfahren zum Herstellen einer Schmelze aus Steinen, Schlacken und/oder anderen Silikatmaterialien und Mineralen, wobei ein Kupolofen mit einer Mischung oder abwechselnden Lagen aus Koks und brikettartigem Material gleicher Form und Grösse beschickt wird, dadurch gekennzeichnet, dass der Schmelzzone des Kupolofens Verbrennungsluft mit einer Durchflussmenge von mindestens 60 $Nm^3/m^2$ Minute, vorzugsweise 75 – 120 $Nm^3/m^2$ Minute, zugeführt wird, und dass das brikettartige Material mit einer solchen Form gewählt ist, dass die Porosität in der Verbrennungszone und der angrenzenden Zone mindestens 0,45 beträgt.

2. Verfahren nach Anspruch 1, dadurch gekennzeichnet, dass zusätzliche Verbrennungsluft durch zweite Zuführungsrohre über der Schmelzzone zugeführt wird.

3. Verfahren nach Anspruch 2, dadurch gekennzeichnet, dass die gesamte durch die Rohre zugeführte Verbrennungsluft 70 – 110 $Nm^3/m^2$ Minute beträgt.

**Revendications**

1. Procédé de préparation d'un bain de fusion de pierres, de laitiers et/ou d'autres silicates et mineraux, dans lequel un four à cubilot est alimenté par un mélange ou des couches alternees de coque et de matériau aggloméré de même forme et de même grosseur, caractérisé en ce que de l'air de combustion est introduit dans la zone de fusion du four à cubilot avec un débit d'au moins 60 $m^3$ normaux par $m^2$ et par minute, de préférence entre 75 et 120 $m^3$ normaux par $m^2$ et par minute, et en ce que la forme du matériau aggloméré est choisie de façon à ce que la porosité dans la zone de combustion et dans son voisinage atteigné au moins 0,45.

2. Procédé selon la revendication 1, caractérisé en ce que de l'air de conbustion supplémentaire est introduit par deux tuyaux d'alimentation au-dessus de la zone de combustion.

3. Procédé selon la revendication 2, caractérisé en ce que la totalité de l'air de combustion amene par les tuyaux est de 70 à 110 $m^3$ normaux par $m^2$ et par minute.

**Claims**

1. Process for marking a melt from stone materials, slags, and/or other silicate materials and minerals and comprising charging to a cupola furnace a mixture of or alternating layers of coke and briquettes of uniform shape, characterized in that combustion air is supplied to the melting zone of the cupola furnace at a flow rate corresponding to at least 60 $Nm^3/m^2$ minute, preferably 75 – 120 $Nm^3/m^2$ minute, the briquettes being of such a shape that the porosity in the combustion zone and the adjacent zone is at least 0.45.

2. Process according to claim 1, characterized in that supplementary combustion air is added through secondary tuyeres placed above the melting zone.

3. Process according to claim 2, characterized in that total combustion air supply through the tuyeres is 70 – 110 $Nm^3/m^2$ minute.